Europäisches Patentamt

European Patent Office

Office européen des brevets

(19)

(11) Veröffentlichungsnummer: **0 319 788 B1**

(12) ## EUROPÄISCHE PATENTSCHRIFT

(45) Veröffentlichungstag der Patentschrift: **25.08.93**

(51) Int. Cl.5: **H04B 10/06**

(21) Anmeldenummer: **88119600.0**

(22) Anmeldetag: **24.11.88**

(54) Optischer Überlagerungsempfänger für digitale Signale.

(30) Priorität: **07.12.87 DE 3741396**

(43) Veröffentlichungstag der Anmeldung:
**14.06.89 Patentblatt 89/24**

(45) Bekanntmachung des Hinweises auf die
Patenterteilung:
**25.08.93 Patentblatt 93/34**

(84) Benannte Vertragsstaaten:
**DE FR GB IT**

(56) Entgegenhaltungen:
**US-A- 4 612 509**

**JOURNAL OF LIGHTWAVE TECHNOLOGY,
Band LT-5, Nr. 4, April 1987, Seiten 561-572,
IEEE, New York, US; A.W. DAVIS et al.:
"Phase diversity techniques for coherent
optical receivers"**

**JOURNAL OF LIGHTWAVE TECHNOLOGY,
Band LT-5, Nr. 4, April 1987, Seiten 452-460,
IEEE, New York, US; K. IWASHITA et al.:
"Modulation and detection characteristics of
optical continuous phase FSK transmission
system"**

(73) Patentinhaber: **SIEMENS AKTIENGESELL-
SCHAFT
Wittelsbacherplatz 2
D-80312 München(DE)**

(72) Erfinder: **Pietzsch, Joachim, Dr.-Ing.
Waakirchner Strasse 34
D-8000 München 70(DE)**

EP 0 319 788 B1

## Beschreibung

Die Erfindung betrifft einen Überlagerungsempfänger für optische digitale Signale entsprechend dem Oberbegriff des Anspruchs 1.

Ein Überlagerungsempfänger der eingangs erwähnten Art ist aus Electronics Letters vom 12. September 1985 Vol. 21, No. 19, Seiten 867 und 868 bekannt. Der bekannte Empfänger dient zur Demodulation von optischer DPSK-modulierter Signale, er enthält eingangsseitig einen optischen 90°-Hybrid, der mit einem einem Helium-Neon-Laser als lokalen Laser und mit einer in der experimentellen Anordnung simulierten Übertragungsstrecke für digitale Signale mit einer Bitrate von 140 Mbit/s verbunden ist. Unmittelbar mit den Ausgängen des optischen 90°-Hybrids sind getrennt zwei PINFET-Dioden verbunden, so daß sich insgesamt ein 90°-Hybrid mit zwei optischen Eingängen und zwei elektrischen Ausgängen ergibt. Mit den PINFET-Dioden ist jeweils der Eingang eines Demodulatorzweiges verbunden. Jeder der Demodulatorzweige enthält einen Analogmultiplizierer, dessen einer Eingang direkt und dessen anderer Eingang über ein Verzögerungsglied an den Eingang des Zweiges und damit an eine der PINFET-Dioden angeschlossen ist. Die Ausgänge der Analogmultiplizierer sind jeweils getrennt über Tiefpaßfilter mit den Eingängen eines Analogaddierers verbunden, an dem das digitale Signal nach der Übertragung entnehmbar ist.

Der aus Electronics Letters bekannte Demodulatoraufbau ist auch in Journal of Lightwave Technology Vol. LT-5 No. 4. April 1987 Seiten 561 bis 572, insbesondere aus der Figur 11 von Seite 568 bekannt. Dort ist auch ein FSK-Modulator beschrieben, der ebenfalls aus zwei Zweigen mit jeweils einem Analogmultiplizierer aufgebaut ist, wobei jedoch der eine Eingang des Analogmultiplizierers das Eingangssignal des jeweiligen Zweiges direkt und der andere Eingang das Signal des anderen Zweiges in differenzierter Form erhält. Die Ausgangssignale der beiden Multiplizierer sind über einen Subtrahierer zusammengefaßt.

Aus dem Vortrag TUB5 von D.W. Stowe auf der Optical Fiber Conference, New Orleans 1983, ist es bereits bekannt, einen optischen 90°-Hybrid durch die Verkopplung von vier 2 x 2-Kopplern zu realisieren, die Ansprüche an die Kontrolle der optischen Weglänge zwischen den Kopplern sind jedoch extrem hoch.

Aus den Arbeiten von R.G. Priest, IEEE Journal of Quantum Electronics, Bd QE (1982), Seiten 1601-1603, von K.P. Koo, A.B. Tveten und A. Dandridge in Appl. Phys. Lett. 41 (7) vom 1 October 1982, Seiten 616-618 und von A. Dandridge et al in Internat. Conference on Optical Fibre Sensors, London 1983, Seiten 48-52 zur Sensortechnik und insbesondere zum Faserinterferometer sind aus einem 3 x 3-Faserkoppler mit angeschlossenen Fotodioden bestehende 90°-Hybride bekannt. Zur Realisierung des 90°-Hybrides wird ein symmetrischer 3 x 3-Koppler mit jeweils 120° Phasenverschiebung zwischen den Ausgängen verwendet.

Der aus Electronics Letters 1985 bekannte Überlagerungsempfänger dient zur Demodulation von DPSK-Signalen, vorteilhafter für den optischen Überlagerungsempfang ist aber die Übertragung von frequenzsprungmodulierten (FSK-)Signalen, da für deren Erzeugung senderseitig auf einen zusätzlichen Modulator verzichtet werden kann, da bei der Frequenzsprungmodulation die Halbleiter-Laserdiode über den Laserstrom direkt moduliert werden kann. Wegen der im Vergleich zu PSK-modulierten Signalen geringeren Ansprüche an die Güte, also die Breite des ausgesandten Spektralbandes der als Sendelaser vorgesehenen Halbleiterdiode, ist neben FSK auch die CPDFSK-(Continuous Phase Differential Frequency Shift Keying-) Modulation von Vorteil.

Aus der US-A-4612509 ist ein Demodulator für FSK-modulierte Signale mit Zwei Demodulatorzweigen bekannt, die jeweils einen Analogmultiplizierer und ein als "Sample and Hold" bezeichnetes Verzögerungsglied enthalten. Dabei ist mit dem Eingang des ersten Demodulatorzweiges über das erste Verzögerungsglied der erste Eingang des ersten Analogmultiplizierers sowie unmittelbar der zweite Eingang des zweiten Analogmultiplizierers verbunden. Entsprechend ist mit dem Eingang des zweiten Demodulatorzweiges über das zweite Verzögerungsglied ein erster Eingang des zweiten Analogmultiplizierers und unmittelbar ein zweiter Eingang des ersten Analogmultiplizierers verbunden, der Ausgang des ersten Analogmultiplizierers ist mit dem positiven Eingang und der Ausgang des zweiten Analogmultiplizierers mit dem negativen Eingang eines ersten Subtrahierers verbunden, dessen Ausgang mit einem ersten Datenausgang verbunden ist. Ein Hinweis auf den Empfang optischer digitaler Signale und die dafür notwendige Erzeugung eines Regelsignals für den örtlichen Laser ist diesem Dokument nicht entnehmbar.

Die Aufgabe bei der vorliegenden Erfindung besteht also darin, einen optischen Empfänger der eingangs erwähnten Art so weiter zu entwickeln, daß dieser auch für den Empfang von FSK- oder CPDFSK- modulierten Signalen geeignet ist, wobei im Hinblick auf die Demodulation durch Überlagerung mit dem Ausgangssignal eines örtlichen Oszillators eine präzise Frequenzregelung dieses örtlichen Oszillators möglich sein muß.

Erfindungsgemäß wird die Aufgabe durch einen optischen Überlagerungsempfänger der eingangs erwähnten Art gelöst, der durch die im Kennzeichen der Patentansprüche 1 oder 2 angegebenen Merkmale weitergebildet ist. Zweckmäßige Ausbildungen des erfindungsgemäßen optischen Überlagerungsempfängers sind in den Patentansprüchen 3 bis 9 näher beschrieben, diese Ausbildungen ermöglichen auch die Demodulation von CBDFSK-Signalen und die Demodulation von Übertragungssignalen mit sehr kleinem Frequenzhub, bei denen also der Frequenzhub gleich oder kleiner der Hälfte der Bitfolgefrequenz ist.

Die Erfindung soll im folgenden anhand von in der Zeichnung dargestellten Ausführungsbeispielen näher erläutert werden. Dabei zeigt

Figur 1      einen ersten erfindungsgemäßen optischen Überlagerungsempfänger für FSK-modulierte Signale und

Figur 2      einen optischen Überlagerungsempfänger nach der Erfindung, der gegenüber der Ausführung nach Figur 1 eine verbesserte Frequenzregelung des lokalen Lasers gestattet und sehr universell einsetzbar ist.

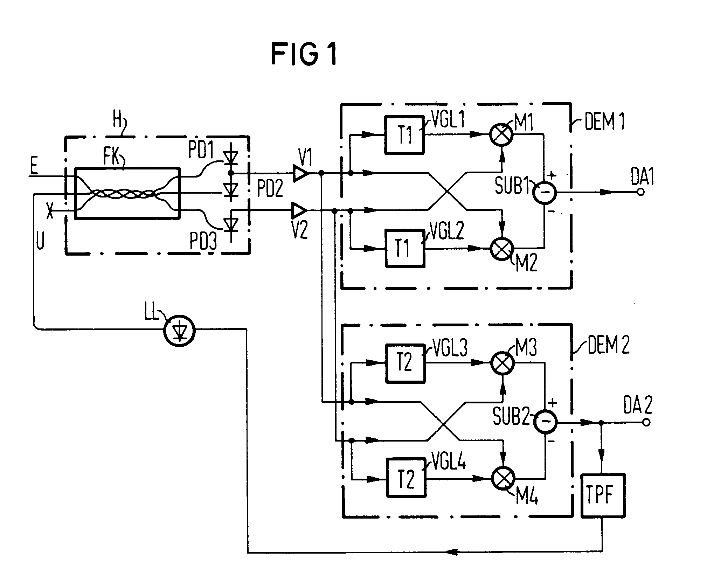

Der optische Überlagerungsempfänger nach der Figur 1 enthält eingangsseitig einen optoelektrischen 90°-Hybrid H, der einen ersten optischen Anschluß E für das Empfangssignal und einen zweiten optischen Anschluß U für das Signal des lokalen Lasers LL aufweist und einen 3 x 3 - Faserkoppler mit drei angekoppelten Fotodioden PD1, PD2, PD3 enthält. Dabei sind die Kathode der ersten und die Anode der zweiten Fotodiode PD1, PD2 miteinander und mit dem Eingang eines ersten Fotoverstärkers V1 verbunden, an die Anode der dritten Fotodiode ist direkt der Eingang eines zweiten Fotoverstärkers V2 angeschlossen. Die Fotodioden sind außerdem noch mit - in der Zeichnung nicht dargestellten - Vorspannungsquellen verbunden. Die Fotoverstärker V1, V2, sind als verstärkende Strom-Spannungswandler aufgebaut.

Die Ausgänge der beiden Fotoverstärker V1, V2 sind jeweils getrennt mit den Eingängen eines ersten und eines zweiten Zweiges eines ersten Demodulators DEM1 verbunden. Dabei ist mit dem Eingang des ersten Demodulatorzweiges über ein erstes Verzögerungsglied VGL1 der erste Eingang eines ersten Analogmultiplizierers sowie direkt der zweite Eingang eines zweiten Analogmultiplizierers verbunden. Entsprechend ist mit dem Eingang des zweiten Demodulatorzweiges ein zweiter Eingang des ersten Analogmultiplizierers M1 direkt sowie über ein zweites Verzögerungsglied VGL2 ein erster Eingang des zweiten Analogmultiplizierers M2 verbunden. Der Ausgang des ersten Analogmultiplizierers M1 ist mit dem positiven und der Ausgang des zweiten Analogmultiplizierers M2 ist mit dem negativen Eingang eines ersten Subtrahierers SUB1 verbunden. Der Ausgang des ersten Subtrahierers stellt den ersten Datenausgang DA1 dar. Das erste und das zweite Verzögerungsglied VGL1, VGL2 sind dabei so bemessen, daß deren Verzögerungszeiten

$$T1 = \frac{1}{2f_H}$$

sind, wobei $f_H$ der gesamte Frequenzhub des optischen Übertragungssignals ist. In dieser Form ist der optische Übertragungsempfänger nach der Erfindung bereits funktionsfähig, zur Regelung des lokalen Lasers würde dann der Regeleingang des lokalen Lasers LL über ein Tiefpaßfilter an den ersten Datenausgang DA1 angeschlossen werden. Für höhere Ansprüche an die Genauigkeit der Frequenzregelung des lokalen Lasers ist dem ersten Demodulator DEM1 ein zweiter Demodulator DEM2 eingangsseitig parallelgeschaltet.

In diesen Fällen wird auf die Zwischenfrequenz null geregelt. Falls die Zwischenfrequenz von null verschieden ist, wird der Eingang eines auf die Zwischenfrequenz abgestimmten Frequenzdiskriminators mit dem Eingang eines der beiden Demodulatorzweige verbunden, während der Ausgang des Frequenzdiskriminators über das Tiefpaßfilter TPF mit dem Regeleingang des lokalen Lasers LL verbunden ist.

Der zweite Demodulator DEM2 besteht ebenso wie der erste Demodulator DEM1 aus zwei Zweigen, deren Eingänge jeweils getrennt mit den Ausgängen des ersten bzw. zweiten Fotostromverstärkers V1, V2 verbunden sind. Der erste Zweig des zweiten Demodulators DEM2 enthält einen dritten Analogmultiplizierer M3, dessen erster Eingang über ein drittes Verzögerungsglied VGL3 mit dem Eingang des ersten Zweiges und dessen zweiter Eingang unmittelbar mit dem Eingang des zweiten Zweiges verbunden ist. Der zweite Zweig des zweiten Demodulators DEM2 enthält einen vierten Analogmultiplizierer M4, dessen erster Eingang über ein viertes Verzögerungsglied VGL4 an den Eingang des zweiten Zweiges und dessen zweiter Eingang unmittelbar an den Eingang des ersten Zweiges angeschlossen ist. Der Ausgang des dritten Analogmultiplizierers M3 ist mit dem positiven Eingang und der Ausgang des vierten Analogmultiplizierers M4 ist mit dem negativen Eingang eines zweiten Subtrahierers SUB2 verbunden, an dessen Ausgang ein zweiter Datenausgang DA2 angeschlossen ist. Mit diesem zweiten Datenausgang DA2 ist über ein Tiefpaßfilter TPF der Regeleingang des lokalen Lasers LL verbunden Während die Verzögerungszeit T1 des ersten und des zweiten Verzögerungsgliedes VGL1, VGL2 nicht größer als die halbe Bitdauer ist, damit innerhalb der Verzögerungszeit mit ausreichender Sicherheit kein Bitwechsel stattfindet, ist die Verzögerungszeit des T2 des dritten und des vierten Verzögerungsgliedes VGL3, VGL4 typischerweise nur ein Bruchteil der Verzögerungszeit T1 und kann in gewissen Bereichen frei gewählt werden.

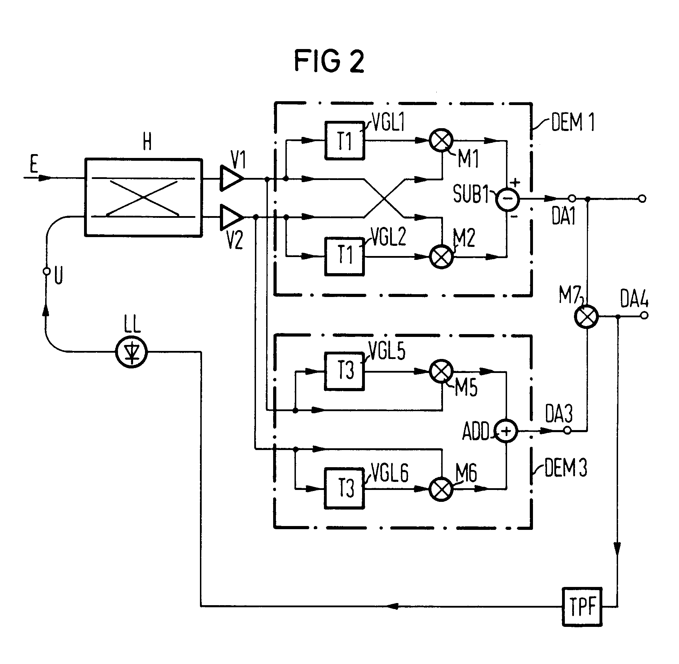

Der in der Figur 2 dargestellte optische Überlagerungsempfänger enthält wie der Überlagerungsempfänger nach Figur 1 eingangsseitig einen optoelektrischen 90°-Hybrid H mit den beiden nachgeschalteten Fotoverstärkern V1 und V2. Mit den Ausgängen dieser Fotoverstärker ist wie beim Überlagerungsempfänger nach der Figur 1 ein erster Demodulator DEM1 verbunden, an dessen Ausgang der erste Datenausgang DA1 angeschlossen ist.

Dem ersten Demodulator DEM1 ist eingangsseitig ein dritter Demodulator DEM3 parallelgeschaltet. Dazu ist dem Eingang des ersten Zweiges des ersten Demodulators der Eingang eines ersten Zweiges des dritten Demodulators und entsprechend dem Eingang des zweiten Zweiges des ersten Demodulators der Eingang des zweiten Zweiges des dritten Demodulators parallelgeschaltet. Der erste Zweig des dritten Demodulators enthält einen fünften Analogmultiplizierer M5, dessen erster Eingang über ein fünftes Verzögerungsglied VGL5 und dessen zweiter Eingang direkt mit dem Eingang des ersten Zweiges des dritten Demodulators verbunden ist. Entsprechend enthält der zweite Zweig einen sechsten Analogmultiplizierer M6, dessen erster Eingang über ein sechstes Verzögerungsglied VGL6 und dessen zweiter Eingang direkt mit dem Eingang des zweiten Zweiges des dritten Demodulators DEM3 verbunden ist. Die Ausgänge des fünften und des sechsten Analogmultiplizierers M5, M6 sind jeweils getrennt mit Eingängen eines Addierers ADD verbunden, dessen Ausgang mit einem dritten Datenausgang DA3 verbunden ist. In dieser Form stellt der optische Übertragungsempfänger nach der Figur 2 bereits eine universelle Struktur dar, die entsprechend dem Codeformat derjeweiligen Übertragungssignale modifizierbar ist. So ist für den Empfang von CPDFSK-Signalen die Verzögerungszeit des ersten und des zweiten Verzögerungsgliedes VGL1, VGL2 kleiner oder gleich und die des fünften und des sechsten Verzögerungsgliedes VGL5, VGL6 etwa gleich der Bitdauer der digitalen Signale einzustellen. In diesem Fall ist der dritte Datenausgang DA3 mit dem Nutzsignalausgang und der erste Datenausgang DA1 mit dem Eingang des Tiefpaßfilters TPF zu verbinden. Um gutes Hochfrequenzverhalten und hohe Stabilität zu erhalten, sind die Verzögerungsglieder - wie bei allen anderen Ausführungen auch - vorteilhafterweise als Verzögerungsleitungen aufgebaut.

In einem weiteren Anwendungsfall für FSK oder CPFSK-Signale ist der erste Datenausgang DA1 der Nutzsignalausgang und der dritte Datenausgang DA3 ist über das Tiefpaßfilter TPF mit dem Regeleingang des lokalen Lasers LL verbunden. Der dritte Demodulator DEM 3 arbeitet hier als Frequenzdiskriminator für die Zwischenfrequenz. Die Verzögerungszeiten des fünften und sechsten Verzögerungsgliedes VGL5 und VGL6 werden dabei etwa auf den Wert

$$T = \frac{1}{4} \cdot \frac{1}{ZF}$$

eingestellt, wobei ZF die Zwischenfrequenz ist. Die Verzögerungszeiten der Verzögerungsglieder VGL1, VGL2 betragen etwa

$$\frac{1}{2f_H} \; .$$

Beim Ausführungsbeispiel sind durch einen siebenten Analogmultiplizierer M7 der erste und der dritte Datenausgang DA1, DA3 zusammengefaßt, der Ausgang des Analogmultiplizierers M7 ist mit einem vierten Datenausgang DA4 verbunden. Eine derartige Anordnung kann auf verschiedene Weise ausgenutzt werden.

Eine erste Möglichkeit zur Ausnutzung der Kombination des ersten und des dritten Datenausganges DA1, DA3 über den siebenten Analogmultiplizierer M7 besteht darin, daß die Verzögerungszeiten des ersten, zweiten, fünften und sechsten Verzögerungsgliedes zu

$$\frac{1}{2f_H}$$

gewählt sind, wobei $f_H$ der sendeseitig verwendete Frequenzhub ist, der gleich oder größer der Bitfolgefrequenz der digitalen Signale ist. In diesem Fall ist der erste Datenausgang DA1 mit dem Nutzsignalausgang verbunden und das Tiefpaßfilter TPF an den vierten Datenausgang DA4 angeschlossen, wie dies die Figur 2 zeigt.

Die Figur 2 kann dadurch modifiziert werden, daß die Verzögerungszeiten des ersten, zweiten, fünften und sechsten Verzögerungsgliedes VGL1, VGL2, VGL5, VGL6 zu

$$\frac{1}{4f_H}$$

gewählt sind.

In diesem Fall ist an den vierten Datenausgang DA4 der Nutzsignalausgang angeschlossen, während das Tiefpaßfilter TPF mit dem ersten Datenausgang DA1 verbunden ist. Dieser zweite Fall bietet den Vorteil, auch bei sehr kleinem Frequenzhub, der dann etwa bei der halben Bitfolgefrequenz der digitalen Signale liegen kann, eine optimale Demodulation des Empfangssignals zu ermöglichen. Die Zwischenfrequenz wird hierbei auf Null geregelt.

Bei Regelung auf eine von Null verschiedene Zwischenfrequenz kann entweder ein zusätzlicher Frequenzdiskriminator dem Eingang eines der Demodulatoren parallelgeschaltet werden, wobei der Ausgang des Frequenzdiskriminators über ein Tiefpaßfilter den lokalen Laser LL steuert, oder ein vierter Demodulator DEM4, der wie der dritte Demodulator DEM3 aufgebaut ist, den Demodulatoren DEM1 und DEM3 parallelgeschaltet werden. Der Demodulator DEM4, dessen Verzögerungsglieder Verzögerungszeiten T = 1/(4 ZF) besitzen, arbeitet hierbei als Frequenzdiskriminator für die Zwischenfrequenz ZF und steuert mit seinem Ausgang über ein Tiefpaßfilter den lokalen Laser LL.

**Patentansprüche**

**1.** Überlagerungsempfänger für optische digitale Signale, mit einem eingangsseitigen 90°-Hybrid mit zwei optischen Eingängen und zwei elektrischen Ausgängen, an denen zwei zueinander um 90° verschobene Signale auftreten, mit zwei nachgeschalteten Demodulatorzweigen, die jeweils einen Analogmultiplizierer mit zwei Eingängen und ein Verzögerungsglied enthalten, mit einer Kombination der Ausgangssignale der Demodulatorzweige sowie mit einem lokalen Laser, dessen Frequenz von der der Übertragungssignale wesentlich weniger als die Bitfolgefrequenz der zu übertragenden digitalen Signale abweicht,
**dadurch gekennzeichnet,**
daß mit dem Eingang des ersten Demodulatorzweiges über ein erstes Verzögerungsglied (VGL1) der erste Eingang eines ersten Analogmultiplizierers (M1) sowie unmittelbar der zweite Eingang eines zweiten Analogmultiplizierers (M2) verbunden ist, daß mit dem Eingang des zweiten Demodulatorzweiges über ein zweites Verzögerungsglied (VGL2) ein erster Eingang des zweiten Analogmultiplizierers (M2) und unmittelbar ein zweiter Eingang des ersten Analogmultiplizierers (M1) verbunden sind, daß der Ausgang des ersten Analogmultiplizierers (M1) mit dem positiven Eingang des ersten Subtrahierers (SUB1) und der Ausgang des zweiten Analogmultiplizierers (M2) mit einem negativen Eingang des ersten Subtrahierers (SUB1) verbunden sind, daß der Ausgang des ersten Subtrahierers (SUB1) mit einem ersten Datenausgang (DA1) verbunden ist und
daß mit dem Eingang des ersten Zweiges des ersten Demodulators (DEM1) der Eingang eines ersten Zweiges eines dritten Demodulators (DEM3) und mit dem Eingang des zweiten Zweiges des ersten Demodulators (DEM1) der Eingang eines zweiten Zweiges des dritten Demodulators (DEM3) verbunden sind, daß der erste Eingang des fünften Analogmultiplizierers (M5) über ein fünftes Verzögerungsglied (VGL5) und der zweite Eingang direkt an den Eingang des ersten Zweiges des dritten Demodulators (DEM3) angeschlossen sind, daß der erste Eingang eines sechsten Analogmultiplizierers (M6) über ein sechstes Verzögerungsglied (VGL6) und der zweite Eingang direkt an den Eingang des zweiten Zweiges des dritten Demodulators (DEM3) angeschlossen sind, daß die Ausgänge des fünften und des sechsten Analogmultiplizierers (M5, M6) mit Eingängen eines Addierers (ADD) verbunden sind, dessen Ausgang mit einem dritten Datenausgang (DA3) verbunden ist, und
daß für den Empfang von FSK-modulierten Übertragungssignalen der erste Datenausgang (DA1) mit dem Nutzsignalausgang und der dritte Datenausgang (DA3) mit dem Tiefpaßfilter (TPF) verbunden ist.

**2.** Überlagerungsempfänger für optische digitale Signale, mit einem eingangsseitigen 90°-Hybrid mit zwei optischen Eingängen und zwei elektrischen Ausgängen, an denen zwei zueinander um 90° verschobene Signale auftreten, mit zwei nachgeschalteten Demodulatorzweigen, die jeweils einen Analogmultiplizierer mit zwei Eingängen und ein Verzögerungsglied enthalten, mit einer Kombination der Ausgangssignale der Demodulatorzweige sowie mit einem lokalen Laser, dessen Frequenz von der der Übertragungssignale wesentlich weniger als die Bitfolgefrequenz der zu übertragenden digitalen Signale abweicht,
**dadurch gekennzeichnet,**
daß mit dem Eingang des ersten Demodulatorzweiges über ein erstes Verzögerungsglied (VGL1) der erste Eingang eines ersten Analogmultiplizierers (M1) sowie unmittelbar der zweite Eingang eines zweiten Analogmultiplizierers (M2) verbunden ist, daß mit dem Eingang des zweiten Demodulatorzweiges über ein zweites Verzögerungsglied (VGL2) ein erster Eingang des zweiten Analogmultiplizierers (M2) und unmittelbar ein zweiter Eingang des ersten Analogmultiplizierers (M1) verbunden sind, daß der Ausgang des ersten Analogmultiplizierers (M1) mit dem positiven Eingang des ersten Subtrahierers (SUB1) und der Ausgang des zweiten Analogmultiplizierers (M2) mit einem negativen Eingang des ersten Subtrahierers (SUB1) verbunden sind, daß der Ausgang des ersten Subtrahierers (SUB1) mit einem ersten Datenausgang (DA1) verbunden ist und

daß dem Eingang des ersten Zweiges des ersten Demodulators (DEM1) der Eingang eines ersten Zweiges eines zweiten Demodulators (DEM2) und dem Eingang des zweiten Zweiges des ersten Demodulators (DEM1) der Eingang eines zweiten Zweiges des zweiten Demodulators (DEM2) parallelgeschaltet sind, daß mit dem Eingang des ersten Zweiges des zweiten Demodulators (DEM2) über ein drittes Verzögerungsglied (VGL3) der erste Eingang eines dritten Analogmultiplizierers (M3) und der zweite Eingang eines vierten Analogmultiplizierers (M4) verbunden sind, daß mit dem Eingang des zweiten Zweiges des zweiten Demodulators (DEM2) über ein viertes Verzögerungsglied (VGL4) der erste Eingang des vierten Analogmultiplizierers (M4) und der zweite Eingang des dritten Analogmultiplizierers (M3) verbunden sind, daß mit dem Ausgang dieses dritten Analogmultiplizierers (M3) der positive Eingang und mit dem Ausgang des vierten Analogmultiplizierers (M4) der negative Eingang eines zweiten Analogsubtrahierers (SUB2) verbunden sind, daß der Ausgang des zweiten Analogsubtrahierers (SUB2) mit einem zweiten Datenausgang (DA2) sowie über ein Tiefpaßfilter (TPF) mit dem Regeleingang des lokalen Lasers (LL) verbunden ist.

3. Überlagerungsempfänger nach Patentanspruch 2,
   **dadurch gekennzeichnet,**
   daß das dritte und das vierte Verzögerungsglied (VGL3, VGL4) eine Verzögerungszeit aufweisen, die wesentlich kleiner als

$$\frac{1}{2f_H}$$

ist, wobei $f_H$ der gesamte Frequenzhub des optischen Übertragungssignals ist.

4. Überlagerungsempfänger nach Patentanspruch 1,
   **dadurch gekennzeichnet,**
   daß die Verzögerungszeiten des fünften und des sechsten Verzögerungsgliedes (VGL5, VGL6) dem vierten Teil der reziproken Zwischenfrequenz entsprechen.

5. Überlagerungsempfänger nach Patentanspruch 1,
   **dadurch gekennzeichnet,**
   daß für den Empfang von CPDFSK-Signalen die Verzögerungszeiten des ersten und des zweiten Verzögerungsgliedes (VGL1, VGL2) kleiner oder gleich und die des fünften und des sechsten Verzögerungsgliedes (VGL5, VGL6) etwa gleich der Bitdauer sind, daß der erste Datenausgang (DA1) mit dem Tiefpaßfilter (TPF) und der dritte Datenausgang (DA3) mit dem Nutzsignalausgang verbunden sind.

6. Überlagerungsempfänger nach Patentanspruch 1,
   **dadurch gekennzeichnet,**
   daß mit dem ersten Datenausgang (DA1) und mit dem dritten Datenausgang (DA3) die Eingänge eines siebenten Analogmultiplizierers (M7) verbunden sind und dessen Ausgang mit einem vierten Datenausgang (DA4) verbunden ist, an den das Tiefpaßfilter (TPF) angeschlossen ist, daß der erste Datenausgang (DA1) mit dem Nutzsignalausgang verbunden ist und daß die Verzögerungszeiten des ersten, zweiten, fünften, sechsten Verzögerungsgliedes (VGL1, VGL2, VGL5, VGL6) etwa

$$\frac{1}{2f_H}$$

sind, wobei $f_H$ der sendeseitig verwendete Frequenzhub ist, der gleich oder größer der Bitfolgefrequenz der digitalen Signale ist.

7. Überlagerungsempfänger nach Patentanspruch 1,
   **dadurch gekennzeichnet,**
   daß mit dem ersten und dem dritten Datenausgang (DA1, DA3) die Eingänge eines siebenten Analogmultiplizierers (M7) verbunden sind, dessen Ausgang mit einem vierten Datenausgang (DA4) verbunden ist, an den der Nutzsignalausgang angeschlossen ist, daß das Tiefpaßfilter (TPF) mit dem ersten Datenausgang (DA1) verbunden ist und daß die Verzögerungszeiten des ersten, zweiten, fünften und sechsten Verzogerungsgliedes (VGL1, VGL2, VGL5, VGL6) gleich

$$\frac{1}{4f_H}$$

sind.

8.  Überlagerungsempfänger nach Patentanspruch 1,

    **dadurch gekennzeichnet,**

    daß mit dem ersten und dem dritten Datenausgang (DA1, DA3) die Eingänge eines siebten Analogmultiplizierers (M7) verbunden sind, dessen Ausgang mit dem vierten Datenausgang (DA4) verbunden ist, an den der Nutzsignalausgang angeschlossen ist, daß das Tiefpaßfilter (TPF) mit dem Ausgang eines auf die Zwischenfrequenz abgestimmten Frequenzdiskriminators verbunden ist, dessen Eingang mit dem Eingang eines der Demodulatoren (DEM1, DEM3) verbunden ist und daß die Verzögerungszeiten des ersten, zweiten, fünften und sechsten Verzögerungsgliedes (VGL1, VGL2, VGL5, VGL6) gleich

    $$\frac{1}{4 f_H}$$

    sind.

9.  Überlagerungsempfänger nach Patentanspruch 1,

    **dadurch gekennzeichnet,**

    daß mit dem ersten und dem dritten Datenausgang (DA1, DA3) die Eingänge eines siebten Analogmultiplizierers (M7) verbunden sind, dessen Ausgang mit einem vierten Datenausgang (DA4) verbunden ist, an den der Nutzsignalausgang angeschlossen ist, daß dem ersten bzw. zweiten Zweig des dritten Demodulators (DEM3) der erste bzw. zweite Zweig eines vierten Demodulators (DEM4) eingangsseitig parallelgeschaltet sind, daß der vierte Demodulator (DEM4) wie der dritte Demodulator (DEM3) aufgebaut ist, daß die Verzögerungszeiten des ersten, zweiten, fünften und sechsten Verzögerungsgliedes (VGL1, VGL2, VGL5, VGL6) gleich

    $$\frac{1}{4 f_H}$$

    und die Verzögerungszeiten der im vierten Demodulator enthaltenen Verzögerungsglieder gleich dem vierten Teil der reziproken Zwischenfrequenz sind und daß das Tiefpaßfilter (TPF) an den Ausgang des vierten Demodulators (DEM4) angeschlossen ist.

**Claims**

1.  Heterodyne receiver for optical digital signals, comprising on the input side a 90° hybrid with two optical inputs and two electrical outputs, at which two signals displaced by 90° with respect to one another occur, with two following demodulator branches which in each case contain an analog multiplier with two inputs and a delay section, with a combination of the output signals of the demodulator branches and with a local laser the frequency of which deviates from that of the transmission signals by much less than the bit repetition rate of the digital signals to be transmitted, characterized in that the input of the first demodulator branch is connected via a first delay section (VGL1) to the first input of a first analog multiplier (M1) and directly to the second input of a second analog multiplier (M2), that the input of the second demodulator branch is connected via a second delay section (VGL2) to a first input of the second analog multiplier (M2) and directly to a second input of the first analog multiplier (M1), that the output of the first analog multiplier (M1) is connected to the positive input of the first subtracting circuit (SUB1) and the output of the second analog multiplier (M2) is connected to a negative input of the first subtracting circuit (SUB1), that the output of the first subtracting circuit (SUB1) is connected to a first data output (DA1), in that the input of the first branch of the first demodulator (DEM1) is connected to the input of a first branch of a third demodulator (DEM3) and the input of the second branch of the first demodulator (DEM1) is connected to the input of a second branch of the third demodulator (DEM3), that the first input of the fifth analog multiplier (M5) is connected via a fifth delay section (VGL5) and the second input is connected directly to the input of the first branch of the third demodulator (DEM3), that the first input of a sixth analog multiplier (M6) is connected via a sixth delay section (VGL6) and the second input is connected directly to the input of the second branch of the third demodulator (DEM3), that the outputs of the fifth and of the sixth analog multiplier (M5, M6) are connected to inputs of an adder (ADD), the output of which is connected to a third data output (DA3), and that the first data output (DA1) is connected to the useful signal output and the third data output (DA3) is connected to the low-pass filter (TPF) for the reception of FSK-modulated transmission signals.

2. Heterodyne receiver for optical digital signals, comprising on the input side a 90° hybrid with two optical inputs and two electrical outputs, at which two signals displaced by 90° with respect to one another occur, with two following demodulator branches which in each case contain an analog multiplier with two inputs and a delay section, with a combination of the output signals of the demodulator branches and with a local laser the frequency of which deviates from that of the transmission signals by much less than the bit repetition rate of the digital signals to be transmitted, characterized in that the input of the first demodulator branch is connected via a first delay section (VGL1) to the first input of a first analog multiplier (M1) and directly to the second input of a second analog multiplier (M2), that the input of the second demodulator branch is connected via a second delay section (VGL2) to a first input of the second analog multiplier (M2) and directly to a second input of the first analog multiplier (M1), that the output of the first analog multiplier (M1) is connected to the positive input of the first subtracting circuit (SUB1) and the output of the second analog multiplier (M2) is connected to a negative input of the first subtracting circuit (SUB1), that the output of the first subtracting circuit (SUB1) is connected to a first data output (DA1), that the input of the first branch of the first demodulator (DEM1) is connected in parallel with the input of a first branch of a second demodulator (DEM2) and the input of the second branch of the first demodulator (DEM1) is connected in parallel with the input of a second branch of the second demodulator (DEM2), that the input of the first branch of the second demodulator (DEM2) is connected via a third delay section (VGL3) to the first input of a third analog multiplier (M3) and to the second input of a fourth analog multiplier (M4), that the input of the second branch of the second demodulator (DEM2) is connected via a fourth delay section (VGL4) to the first input of the fourth analog multiplier (M4) and to the second input of the third analog multiplier (M3), that the output of this third analog multiplier (M3) is connected to the positive input and the output of the fourth analog multiplier (M4) is connected to the negative input of a second analog subtracting circuit (SUB2), that the output of the second analog subtracting circuit (SUB2) is connected to a second data output (DA2) and via a low-pass filter (TPF) to the control input of the local laser (LL).

3. Heterodyne receiver according to Claim 2, characterised in that the third and the fourth delay section (VGL3, VGL4) exhibit a delay time which is much shorter than

$$\frac{1}{2f_H} \text{,}$$

where $f_H$ is the total frequency deviation of the optical transmission signal.

4. Heterodyne receiver according to Claim 1, characterised in that the delay times of the fifth and of the sixth delay section (VGL5, VGL6) correspond to the fourth part of the reciprocal intermediate frequency.

5. Heterodyne receiver according to Claim 1, characterised in that the delay times of the first and of the second delay section (VGL1, VGL2) are shorter than or equal to and those of the fifth and of the sixth delay section (VGL5, VGL6) are about equal to the bit period, that the first data output (DA1) is connected to the low pass filter (TPF) and the third data output (DA3) is connected to the useful signal output, for the reception of CPDFSK signals.

6. Heterodyne receiver according to Claim 1, characterised in that the first data output (DA1) and the third data output (DA3) are connected to the inputs of a seventh analog multiplier (M7) and the output of the latter is connected to a fourth data output (DA4) which is connected to the low-pass filter (TPF), that the first data output (DA1) is connected to the useful signal output and that the delay times of the first, second, fifth, sixth delay section (VGL1, VGL2, VGL5, VGL6) are approximately

$$\frac{1}{2f_H} \text{,}$$

where $f_H$ is the frequency deviation used on the transmitting side, which is equal to or greater than the bit repetition rate of the digital signals.

7. Heterodyne receiver according to Claim 1, characterised in that the first and the third data output (DA1, DA3) are connected to the inputs of a seventh analog multiplier (M7) the output of which is connected to a fourth data output (DA4) which is connected to the useful signal output, that the low-pass filter (TPF) is connected to the first data output (DA1) and that the delay times of the first, second, fifth and sixth delay section (VGL1, VGL2, VGL5, VGL6) are equal to

$$\frac{1}{4\,f_B} \cdot$$

8. Heterodyne receiver according to Claim 1, characterised in that the first and the third data output (DA1, DA3) are connected to the inputs of a seventh analog multiplier (M7) the output of which is connected to the fourth data output (DA4) which is connected to the useful signal output, that the low-pass filter (TPF) is connected to the output of a frequency discriminator which is tuned to the intermediate frequency and the input of which is connected to the input of one of the demodulators (DEM1, DEM3), and that the delay times of the first, second fifth and sixth delay section (VGL1, VGL2, VGL5, VGL6) are equal to

$$\frac{1}{4\,f_B} \cdot$$

9. Heterodyne receiver according to Claim 1, characterised in that the first and the third data output (DA1, DA3) are connected to the inputs of a seventh analog multiplier (M7) the output of which is connected to a fourth data output (DA4) which is connected to the useful signal output, that the first and second branch, respectively, of the third demodulator (DEM3) are connected in parallel with the first and second branch, respectively, of a fourth demodulator (DEM4) at the input side, that the fourth demodulator (DEM4) is constructed like the third demodulator (DEM3), that the delay times of the first, second, fifth and sixth delay section (VGL1, VGL2, VGL5, VGL6) are equal to

$$\frac{1}{4\,f_B}$$

and the delay times of the delay sections contained in the fourth demodulator are equal to the fourth part of the reciprocal intermediate frequency and that the low-pass filter (TPF) is connected to the output of the fourth demodulator (DEM4).

## Revendications

1. Récepteur superhétérodyne pour des signaux optiques numériques, comportant un circuit hybride à 90° côté entrée possédant deux entrées optiques et deux sorties électriques au niveau desquelles apparaissent deux signaux décalés réciproquement de 90° et comportant deux branches de démodulation qui sont branchées en aval et qui contiennent chacune un multiplicateur analogique comportant deux entrées et un circuit de retardement, avec combinaison des signaux de sortie des branches de démodulation, et comportant un laser local, dont les fréquences diffèrent nettement moins de la fréquence des signaux de transmission que ce n'est le cas de la fréquence de récurrence des bits des signaux numériques à transmettre,
caractérisé par le fait
que la première entrée d'un premier multiplicateur analogique (M1) est raccordée à l'entrée de la première branche de démodulation par l'intermédiaire d'un premier circuit de retardement (VGL1) et que la seconde entrée d'un second multiplicateur analogique (M2) est raccordée directement à l'entrée de la première branche de démodulation, qu'une première entrée du second multiplicateur analogique (M2) est raccordée à l'entrée de la seconde branche de démodulation par l'intermédiaire d'un second circuit de retardement (VGL2) et qu'une seconde entrée du premier multiplicateur analogique (M1) est raccordée directement à l'entrée de la seconde branche de démodulation, que la sortie du premier multiplicateur analogique (M1) est raccordée à l'entrée positive du premier soustracteur (SUB1) et que la sortie du second multiplicateur analogique (M2) est raccordée à une entrée négative du premier soustracteur (SUB1), que la sortie du premier soustracteur (SUB1) est connectée à une première sortie de données (DA1), et que l'entrée d'une première branche d'un troisième démodulateur (DEM3) est raccordée à l'entrée de la seconde branche du premier démodulateur (DEM1) et que l'entrée d'une seconde branche du troisième démodulateur (DEM3) est raccordée à l'entrée de la seconde branche du premier démodulateur (DEM1), que la première entrée du cinquième multiplicateur analogique (M5) est raccordée par l'intermédiaire d'un cinquième circuit de retardement (VGL5) à l'entrée de la première branche du troisième démodulateur (DEM3) et que la seconde entrée du démultiplicateur est raccordée directement à l'entrée de la première branche du troisième démodulateur, que la première entrée d'un sixième multiplicateur analogique (M6) est raccordée par l'intermédiaire d'un sixième circuit de retardement (VGL6) à l'entrée de la branche du troisième démodulateur (DEM3) et que la seconde entrée de ce multiplicateur est raccordée directement à l'entrée de ce démodulateur, que les sorties des cinquième et sixième multiplicateurs analogiques (M5,M6) sont raccordées à des entrées d'un additionneur (ADD), dont la sortie est connectée à une troisième sortie de données (DA3), et
que pour la réception de signaux de transmission modulés selon la modulation FSK, la première sortie de données (DA1) est connectée à la sortie des signaux utiles et que la troisième sortie de données (DA3) est raccordée au filtre passe-bas (TPF).

2. Récepteur superhétérodyne pour des signaux optiques numériques, comportant un circuit hybride à 90° côté entrée, possédant deux entrées optiques et deux sorties électriques au niveau desquelles apparaissent deux signaux décalés réciproquement de 90° et comportant deux branches de démodulation qui sont branchées en aval et qui contiennent chacune un multiplicateur analogique comportant deux entrées et un circuit de retardement, avec combinaison des signaux de sortie des branches de démodulation, et comportant un laser local, dont les fréquences diffèrent nettement moins de la fréquence des signaux de transmission que ce n'est le cas de la fréquence de récurrence des bits des signaux numériques à transmettre,
caractérisé par le fait
que la première entrée d'un premier multiplicateur analogique (M1) est raccordée à l'entrée de la première branche de démodulation par l'intermédiaire d'un premier circuit de retardement (VGL1) et que la seconde entrée d'un second multiplicateur analogique (M2) est raccordée directement à l'entrée de la première branche de démodulation, qu'une première entrée du second multiplicateur analogique (M2) est raccordée à l'entrée de la seconde branche de démodulation par l'intermédiaire d'un second circuit de retardement (VGL2) et qu'une seconde entrée du premier multiplicateur analogique (M1) est raccordée directement à l'entrée de la seconde branche de démodulation, que la sortie du premier multiplicateur analogique (M1) est raccordée à l'entrée positive du premier soustracteur (SUB1) et que la sortie du second multiplicateur analogique (M2) est raccordée à une entrée négative du premier soustracteur (SUB1), que la sortie du premier soustracteur (SUB1) est connectée à une première sortie de données (D1), et
que l'entrée d'une seconde branche d'un second démodulateur (DEM2) est branchée en parallèle avec l'entrée de la première branche du premier démodulateur (DEM1) et que l'entrée d'une seconde branche du second démodulateur (DEM2) est branchée en parallèle avec l'entrée de la seconde branche du premier démodulateur (DEM1), que la première entrée d'un troisième multiplicateur analogique (M3) et la seconde entrée d'un quatrième multiplicateur analogique (M4) sont raccordée à l'entrée de la seconde branche du second démodulateur (DEM2) par l'intermédiaire d'un troisième circuit de retardement (VGL3), que la première entrée du quatrième multiplicateur analogique (M4) et la seconde entrée du troisième multiplicateur analoqique (M3) sont raccordées à l'entrée de la seconde branche du second démodulateur (DEM2) par l'intermédiaire d'un quatrième circuit de retardement (VGL4), que l'entrée positive d'un second soustracteur analogique (SUB2) est raccordée à la sortie de ce troisième multiplicateur analogique (M3) et que l'entrée négative du second soustracteur analogique est raccordée à la sortie du quatrième multiplicateur analogique (M4), que la sortie du second soustracteur analogique (SUB2) est raccordée à la seconde sortie de données ainsi que, par l'intermédiaire d'un filtre passe-bas (TPF), à l'entrée de régulation du laser local (LL).

3. Récepteur superhétérodyne suivant la revendication 2, caractérisé par le fait que les troisième et quatrième circuits de retardement (VGL3, VGL4) produisent un retard qui est nettement inférieur à

$$\frac{1}{2f_H},$$

$f_H$ représentant l'excursion de fréquence totale du signal optique de transmission.

4. Récepteur superhétérodyne suivant la revendication 1, caractérisé par le fait que les retards produits dans les cinquième et sixième circuits de retardement (VGL5,VGL6) correspondent au quart de l'inverse de la fréquence intermédiaire.

5. Récepteur superhétérodyne suivant la revendication 1, caractérisé par le fait que pour la réception de signaux CPDSFSK, les retards produits dans les premier et second circuits de retardement (VGL1,VGL2) sont inférieurs ou égaux et ceux produits par les cinquième et sixième circuits de retardement (VGL5,VGL6) sont approximativement égaux à la durée d'un bit, et que la première sortie de données (D1) est raccordée au filtre passe-bas (TPF) et la troisième sortie de données (DA3) est raccordée à la sortie du signal utile.

6. Récepteur superhétérodyne suivant la revendication 1, caractérisé par le fait que les entrées d'un septième multiplicateur analogique (M7) sont raccordées à la première sortie de données (DA1) et à la troisième sortie de données (DA3), et que la sortie de ce multiplicateur analogique est raccordée à une quatrième sortie de données (DA4), à laquelle est connecté le filtre passe-bas (TPF), que la première sortie de données (DA1) est reliée à la sortie du signal utile et que les retards produits par les premier, second, cinquième, sixième circuits de retardement (VGL1, VGL2, VGL5, VGL6) sont égaux approximativement à

$$\frac{1}{2f_H},$$

$f_H$ étant l'excursion de fréquence utilisée côté émission et qui est égale ou supérieure à la fréquence de récurrence des bits des signaux numériques.

7. Récepteur superhétérodyne suivant la revendication 1, caractérisé par le fait qu'aux première et troisième sorties de données (DA1, DA3) sont raccordées les entrées d'un septième multiplicateur analogique (M7), dont la sortie est raccordée à une quatrième sortie de données (DA4), à laquelle est connectée la sortie du signal utile, que le filtre passe-bas (TPF) est raccordé à la première sortie de données (DA1) et que les retards produits par les premier, second, cinquième et sixième circuits de retardement (VGL1, VGL2, VGL5, VGL6) sont égaux à

$$\frac{1}{4f_H}.$$

8. Récepteur superhétérodyne suivant la revendication 1, caractérisé par le fait qu'aux première et troisième sorties de données (DA1,DA3) sont raccordées les entrées d'un septième multiplicateur analogique (M7), dont la sortie est connectée à la quatrième sortie de données (DA4), à laquelle est raccordée la sortie du signal utile, que le filtre passe-bas (TPF) est connecté à la sortie d'un discriminateur de fréquence accordé sur la fréquence intermédiaire et dont l'entrée est reliée à une entrée de l'un des démodulateurs (DEM1, DEM3) et que les retards produits dans les premier, second, cinquième et sixième circuits de retardement (VGL1, VGL2, VGL5, VGL6) sont égaux à

$$\frac{1}{4f_H}.$$

9. Récepteur superhétérodyne suivant la revendication 1, caractérisé par le fait qu'aux première et troisième sorties de données (DA1,DA3) sont raccordées les entrées d'un septième multiplicateur analogique (M7), dont la sortie est reliée à une quatrième sortie de données (DA4), à laquelle est connectée la sortie du signal utile, que les première et seconde branches d'un quatrième démodulateur (DEM4) sont branchées en parallèle, côté entrée, avec les première et seconde branches du troisième démodulateur (DEM3), que le quatrième démodulateur (DEM4) est agencé de la même manière que le troisième démodulateur (DEM3), que les retards produits par les premier, deuxième, cinquième et sixième circuits de retardement (VGL1, VGL2, VGL5, VGL6) sont égaux à

$$\frac{1}{4f_H}$$

et que les retards produits dans les circuits de retardement contenus dans le quatrième démodulateur sont égaux au quart de l'inverse de la fréquence intermédiaire, et que le filtre passe-bas (TPF) est raccordé à la sortie du quatrième démodulateur (DEM4).

EP 0 319 788 B1

# FIG 1

# FIG 2